# EUROPEAN PATENT APPLICATION

(11) **EP 4 242 734 A1**
(43) Date of publication of application: **13.09.2023**
(21) Application number: 20829950.3
(22) Date of filing: 05.11.2020
(51) Int. Cl.: G02C 7/04

(54) **CONTACT LENS**

(71) Applicant: Pauné Fabré, Jaime, 08980 Sant Feliu del Llobregat (ES)
(72) Inventor: Pauné Fabré, Jaime, 08980 Sant Feliu del Llobregat (ES)
(74) Representative: Ponti & Partners, S.L.P
(86) International application number: PCT/ES2020/070682
(87) International publication number: WO 2022/096758

(57) **Abstract**

Contact lens (1) having an inner profile intended to be placed on the corneal surface (0) of the eye and suitably modify the thicknesses of the epithelium (0') thereof to correct refractive defects, said inner profile comprising a central zone (10) designed to be placed concentrically with the pupil of the eye, a contact zone (11) concentric with the central zone (10) whose radial section is convex with respect to the eye and is designed to be in contact with the epithelium (0'), and a connection zone (10a, 10a') that connects the central zone (10) with the contact zone (11), where said radial section of the contact zone (11) has a radius of curvature (R, R', R") of between 0.1 mm and 5 mm.

## Description

### Field of the invention

The present invention relates to a contact lens particularly suitable for orthokeratology, designed to induce controlled epithelial hypoplasia and hyperplasia in the necessary areas of a patient's cornea, thereby modifying the corneal surface to correct the refractive error of the patient.

### Background of the invention

Contact lenses are known as orthokeratological or inverse geometry lenses that reshape the surface layer of the cornea, known as the epithelium, to correct refractive defects of the eye while the patient sleeps.

The corneal epithelium is composed of four to six layers of stratified, squamous, non-keratinised epithelial cells, and has a thickness of about 50 µm in humans. The epithelium can change its thickness due to hyperplasia (growth of a greater number of cell layers) or hypoplasia (growth of a smaller number of cell layers).

An orthokeratological contact lens treats refractive defects by a controlled reshaping of the epithelium. A lens for myopia is defined by a central zone, known as the optical zone, with a greater radius than the corneal area, and an annular zone around the central zone with a smaller radius than the corneal radius, also known as a return zone, which generates an annular zone separated from the cornea with tear accumulation. Examples of these can be seen in documents US4952045A, ES1058102U, ES2406380A1 and WO2018234666A1. The lens also includes a corneal contact zone located between said central zone and said tear accumulation zone, as well as a peripheral alignment zone that rests on the periphery of the cornea, as disclosed in documents US5963297A and WO2002041070A1.

Current designs are such that during sleeping hours the optical zone compresses a central portion of the cornea while inducing tear accumulation in the annular zone, making the epithelium conform to the shape of the lens. The refractive change caused by changing the curvature of the epithelium, whether by central thinning or peripheral thickening, leads to a corrected vision.

Hitherto, the contact zone and the alignment zone are designed to create a corneal support distributed over a large area, in order to keep the optical zone substantially centred on the visual axis of the cornea. However, although there are currently many designs for the inner face of this type of lenses, all correspond to the definition of the radius of the central zone and/or the tear accumulations, but not to the definition of the contact zone and the alignment zone to aid in epithelial reshaping.

Although lens design has evolved, drawbacks remain such as the time required to obtain results, the number of lenses needed, the amount of refraction that can be corrected, and the stability of the patient's eyesight. The structure of this type of lenses can be defined in an even more optimal manner to achieve improved results.

### Description of the invention

The present invention provides an orthokeratological contact lens having an inner profile intended to be placed on the corneal surface of an eye and induce changes in the thickness of areas of the epithelium thereof. Said inner profile comprises:
- A central zone placed concentrically with the pupil of the eye and designed to correct centrally the refractive defect of the patient;
- A contact zone concentric with the central zone, with a convex radial section with respect to the eye and designed to be in contact with the epithelium (0'), and
- A connection zone that connects the central zone with the contact zone.

The present lens is characterised in that the radial section of the contact zone has a radius of curvature between 0.1 mm and 5 mm. Because of this, the contact zone applies a controlled and optimum annular pressure on the periphery of the cornea, reshaping it as quickly as possible by both restricting new epithelial cells in the contact zone and increasing them in adjacent areas. In addition, this range of curvature radii prevents the drawbacks of current lenses intended for this type of treatment, namely excessive focal compression of the contact zone, due to edges in the intersection of two adjacent curves, which could cause an uncomfortable abrasive feeling for the user or make the epithelium excessively thin, leading to an ineffective correction or even being dangerous to corneal integrity. Preferably, said radius of curvature is between 1 mm and 3 mm, which is the range that achieves high yet comfortable epithelial reshaping, thereby optimising the correction of the refractive defect.

In general, the radial section of the contact zone can be defined by a single radius of curvature, although optionally it can be defined by more than one radius of curvature. If there is more than one radius of curvature, these are also between 0.1 mm and 5 mm, preferably between 1 mm and 3 mm.

In a preferred embodiment the connection zone has an inclination with respect to the tangent of the corneal surface of between 10° and 85°.

Another preferred embodiment of the lens comprises an outlet zone that is annularly connected to the outer perimeter of the contact zone. Preferably, the inclination of the outlet zone with respect to the tangent of the corneal surface is between 5° and 85°. Optionally, this embodiment of the lens can comprise an additional contact zone, more peripheral than said contact zone and also configured to be in contact with the corneal surface. This additional contact zone is connected to said outlet zone by a zone separated from the cornea, and on the outer perimeter thereof it is connected to an additional outlet zone. In other possible embodiments the lens can comprise more than one additional contact zone, radially connected with each other through corresponding separated zones and additional outlet zones.

The contact lens according to the invention overcomes the drawbacks of the prior art and provides a design that allows correcting the eyesight of a patient in a more comfortable, quicker, and more effective manner. Moreover, in addition to correcting greater refraction defects it allows establishing larger treatment areas to reduce undesired effects such as halos or glare.

### Brief description of the drawings

In order to better understand the description made, a set of drawings has been provided which, schematically and solely by way of non-limiting example, represent a practical case of embodiment.
Figure 1 is a schematic view of a symmetrical section of a first embodiment of the present contact lens.
Figure 2 is an enlarged view of the inset of figure 1.
Figure 3 is a schematic view of a symmetrical section of a second embodiment of the present contact lens.
Figure 4 is an enlarged view of the inset of figure 3.

### Description of preferred embodiments

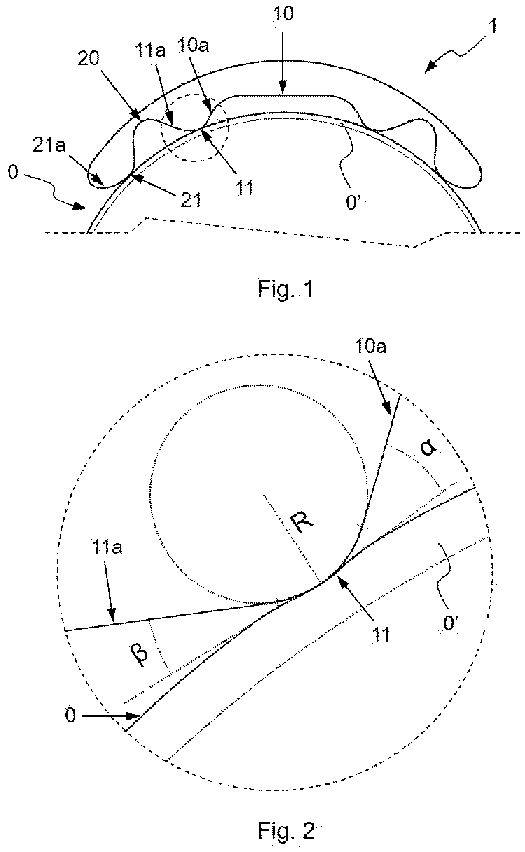

Some examples of embodiments of the present contact lens (1, 1') are described below with reference to figures 1 to 4.

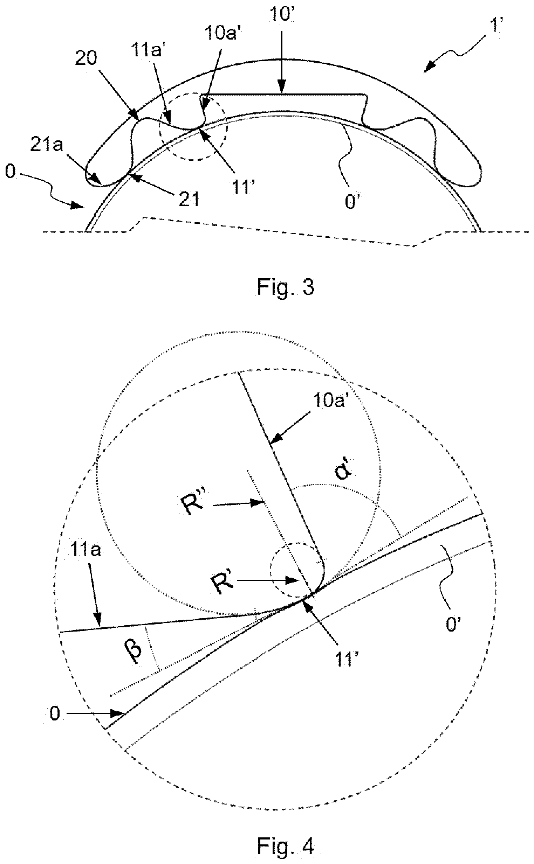

As can be seen in figures 1 and 3, the present invention provides a contact lens (1, 1') having an inner profile intended to be placed on the corneal surface (0) of the eye to reshape its epithelium (0'). Said inner profile comprises:
- A central zone (10, 10') designed to be placed concentrically with respect to the pupil of the eye,
- A contact zone (11, 11') concentric with the central zone (10, 10'), with a convex radial section with respect to the eye and designed to be in contact with the epithelium (0'), and
- A connection zone (10a, 10a') that connects the central zone (10, 10') with the contact zone (11, 11').

The contact lens (1) is characterised in that the radial section of the contact zone (11, 11') has a radius of curvature (R) between 0.1 mm and 5 mm. By having a curvature in this range, the contact zone (11, 11') applies a localised pressure without damaging the epithelium, reshaping it quickly and in an optimal manner.

In the embodiment shown in figures 1 and 2, the contact zone (11) comprises a single radius of curvature (R) of 0.5 mm. In addition, in this preferred embodiment the connection zone (10a) has an inclination angle (α) with respect to the tangent of the corneal surface (0) in contact of 45°. In this embodiment, the contact zone (11) is connected with the connection zone (10a) tangentially, as shown by the dotted perpendicular line.

However, in the embodiment shown in figures 3 and 4, the contact zone (11') comprises two sections, each one with a different radius of curvature (R', R"): a first radius (R') of 0.1 mm, and a second radius (R") of 0.7 mm. The section with the first radius (R') is connected tangentially on one of its sides with the central zone (10') through the connection zone (10a'). On the other side, the section with the first radius (R') is connected tangentially with the section with the second radius (R"). In this embodiment the connection between the two sections is tangential, as shown by the dotted perpendicular line, but this is not an essential feature of the invention. Also in this embodiment, the connection zone (10a') has an inclination angle (α') to the tangent of the corneal surface (0) in contact of 85°.

Both examples of embodiments comprise an outlet zone (11a) connected annularly with the outer perimeter of the contact zone (11, 11'). In these embodiments the inclination angle (ß) of the outlet zone (11a) to the tangent of the corneal surface (0) is 40°.

As can be seen in figures 1 and 3, both embodiments comprise an additional contact zone (21), designed to be in contact with the corneal surface (0), connected with said outlet zone (11a, 11a') through a separate zone (20) of the cornea (0) and connected at its outer perimeter with an additional outlet zone (21a).

## Claims

1. Contact lens (1) having an inner profile intended to be placed on the corneal surface (0) of an eye and suitably modify the thicknesses of its epithelium (0') to correct refractive defects, said inner profile comprising:
- A central zone (10) designed to be placed concentrically with respect to the pupil of the eye,
- A contact zone (11) concentric with the central zone (10), with a convex radial section with respect to the eye and designed to be in contact with the epithelium (0'), and
- A connection zone (10a, 10a') that connects the central zone (10) with the contact zone (11),
the contact lens (1) being **characterised in that** said radial section of the contact zone (11) has a radius of curvature (R, R', R") between 0.1 mm and 5 mm.

2. Contact lens (1) according to claim 1, **characterised in that** the radius of curvature (R, R', R") of said radial section of the contact zone (11) is between 1 mm and 3 mm.

3. Contact lens (1) according to claims 1 or 2, **characterised in that** the curvature of the contact zone (11) is defined by more than one radius of curvature (R, R', R"), which measure between 0.1 mm and 5 mm.

4. Contact lens (1) according to any of claims from 1 to 3, **characterised in that** said connection zone (10a, 10a') has an inclination angle (α, α') with respect to the tangent to the corneal surface (0) at the point of contact of between 10° and 85°.

5. Contact lens (1) according to any of claims from 1 to 4, **characterised in that** it comprises an outlet zone (11a) connected annularly with the outer perimeter of said contact zone (11), whose inclination angle (ß) with respect the tangent to the corneal surface (0) at the point of contact is between 5° and 85°.

6. Contact lens (1) according to claim 5, **characterised in that** it comprises an additional contact zone (21), designed to be in contact with the corneal surface (0), connected with said outlet zone (11a) through a separate zone (20) of the cornea (0) and connected at its outer perimeter with an additional outlet zone (21a).

7. Contact lens (1) according to claim 6, **characterised in that** it comprises more than one additional contact zone (21), connected radially with each other through corresponding zones separated from the cornea and additional outlet zones.
